# FASCICULE DE BREVET EUROPEEN

(11) **EP 2 715 072 B1**
(45) Date de publication et mention de la délivrance du brevet: **01.04.2015**
(21) Numéro de dépôt: 12731048.0
(22) Date de dépôt: 23.05.2012
(51) Int. Cl.: F01D 21/04, F01D 25/24, F02C 7/045, F02K 3/06

(54) **CARTER DE SOUFFLANTE DE TURBOMACHINE**
GEBLÄSEGEHÄUSE FÜR EINE TURBOMASCHINE
TURBOMACHINE FAN CASE

(30) Priorité: 27.05.2011 FR 1154629
(43) Date de publication de la demande: 09.04.2014
(73) Titulaire: SNECMA, 75015 Paris (FR)
(72) Inventeur: LE BORGNE, Bénédicte, Marie, F-77550 Moissy-cramayel Cedex (FR)
(74) Mandataire: Delumeau, François Guy
(86) Numéro de dépôt international: PCT/FR2012/051160
(87) Numéro de publication internationale: WO 2012/164204

(56) Documents cités:
- EP-A1- 1 589 195
- EP-A2- 1 927 728
- EP-A2- 1 961 923
- EP-A2- 2 290 197
- FR-A1- 2 939 130
- FR-A1- 2 952 052

## Description

### Arrière-plan de l'invention

L'invention concerne notamment un carter de soufflante de turbomachine, en particulier de turbomachine de moteur aéronautique.

Dans une telle turbomachine, le carter de soufflante remplit habituellement plusieurs fonctions. Il définit la veine d'entrée d'air du moteur, supporte sur sa face interne un matériau abradable en regard des sommets d'aubes de la soufflante, incorpore ou supporte un bouclier de rétention formant piège à débris, supporte du côté intérieur une structure d'absorption d'ondes sonores pour le traitement acoustique en entrée du moteur et supporte sur sa face externe différents équipements tels que des harnais, tuyauteries et boîtiers.

Il est bien connu de réaliser un carter de soufflante en matériau composite fibres-matrice, généralement fibres-matrice organique (voir par exemple le document EP 1927728). Le document EP 1 961 923 décrit la réalisation d'un tel carter par densification d'une préforme fibreuse obtenue par enroulement en couches superposées d'une texture tissée tridimensionnelle à épaisseur évolutive et intégrant des parties de préforme pour le bouclier de rétention et pour des brides aux extrémités amont et aval du carter.

Il est bien connu par ailleurs de réaliser un traitement acoustique par fixation de panneaux acoustiques sur la face interne du carter, dans la partie aval de celui-ci et/ou dans sa partie amont d'un côté ou de chaque côté d'un revêtement abradable. De façon usuelle, les panneaux sont sous forme de secteurs juxtaposés s'étendant chacun sur une partie de la périphérie interne du carter et les panneaux sont fixés au carter au moyen d'inserts intégrés aux panneaux et de vis.

Un tel mode de fixation de panneaux acoustiques présente plusieurs inconvénients. Il nécessite l'utilisation d'un grand nombre de petites pièces (inserts et vis) et la réalisation de perçages dans le carter. De même, la fixation par vis de plusieurs équipements sur la face externe du carter requiert la réalisation d'un grand nombre de perçages. Or, dans le cas d'un carter en matériau composite, un perçage répété de celui-ci peut affecter les propriétés mécaniques du matériau composite.

### Objet et résumé de l'invention

L'invention a pour but d'éviter de tels inconvénients et propose à cet effet un carter de soufflante de turbomachine en matériau composite comprenant un renfort fibreux densifié par une matrice, lequel carter est formé en une seule pièce avec au moins une nervure qui fait saillie à la face interne ou à la face externe du carter, la nervure comprenant une partie de renfort fibreux qui est liée au renfort fibreux du reste du carter par tissage ou par couture.

Ainsi une ou plusieurs nervures utiles pour le montage de panneaux acoustiques ou autres équipements à la face interne ou externe du carter sont-elles formées avec le carter au stade de sa fabrication.

Dans sa direction longitudinale, la ou chaque nervure s'étend de préférence sensiblement axialement sur une partie de la dimension axiale du carter.

Avantageusement, le renfort fibreux est formé par une texture tissée enroulée en couches superposées, et la partie de renfort fibreux de la ou chaque nervure est solidaire de la couche interne ou externe de la texture par tissage.

Selon un autre de ses aspects, l'invention propose un ensemble formé par un carter de soufflante et des panneaux acoustiques fixés sur la face interne du carter, ensemble dans lequel le carter est en matériau composite comprenant un renfort fibreux densifié par une matrice et est formé en une seule pièce avec des nervures qui font saillie à la face interne du carter et s'étendent axialement sur une partie de la dimension axiale du carter, chaque nervure comprenant une partie de renfort fibreux qui est liée au renfort fibreux du reste du carter par tissage ou par couture, et les panneaux acoustiques sont logés entre les nervures et fixés à celles-ci.

Selon un mode de réalisation de l'ensemble carter-panneaux acoustiques, le renfort fibreux est formé par une texture tissée enroulée en couches superposées, et la partie de renfort fibreux de chaque nervure est solidaire de la couche interne de la texture par tissage.

Selon un mode de réalisation de l'ensemble carter-panneaux acoustiques, le carter est formé en une seule pièce avec en outre au moins une nervure qui fait saillie à la face externe du carter et qui comprend une partie de renfort fibreux liée au reste du renfort fibreux du carter par tissage ou par couture.

Le carter peut porter au moins un équipement fixé sur une telle nervure faisant saillie à la face externe du carter.

Selon un autre aspect, l'invention vise aussi une turbomachine équipée d'un carter de soufflante ou d'un ensemble tel que définis ci-avant.

### Brève description des dessins

L'invention sera mieux comprise à la lecture de la description faite ci-après à titre indicatif mais non limitatif, en référence aux dessins annexés sur lesquels :
- la figure 1 est une vue très schématique d'une turbomachine de moteur aéronautique ;
- les figures 2, 3 et 4 sont des demi-vues en coupe axiale très schématiques de carters de soufflante réalisables selon l'invention pour une turbomachine telle que celle de la figure 1 ;
- la figure 5 est une vue partielle en coupe selon le plan V de la figure 2 ;
- la figure 6 est une vue à échelle agrandie d'un détail de la figure 5 ;
- la figure 7 est une vue partielle en coupe selon le plan VII de la figure 4 ;
- la figure 8 est une vue à plat à échelle réduite d'une texture tissée multicouches destinée à la réalisation d'une préforme fibreuse pour un carter de soufflante tel que celui de la figure 2, selon un mode de réalisation de l'invention ;
- la figure 9 est une vue à échelle agrandie en coupe selon le plan IX de la figure 8 ;
- la figure 10 est une vue similaire à celle de la figure 9 montrant une étape de réalisation d'une préforme fibreuse à partir de la texture de la figure 8 ;
- la figure 11 est une vue schématique en coupe radiale montrant une préforme fibreuse de carter de soufflante mise en forme sur un outillage pour réaliser un carter de soufflante selon l'invention ;
- les figures 12 et 13 sont des vues à échelle agrandie de détails de la figure 11 ;
- la figure 14 est une vue partielle en coupe très schématique de l'outillage de la figure 11 ;
- la figure 15 est une vue partielle en coupe radiale montrant un autre mode de réalisation d'une préforme fibreuse pour un carter de soufflante selon l'invention ; et
- la figure 16 est une vue schématique en coupe radiale montrant une autre préforme fibreuse de carter de soufflante mise en forme sur un outillage pour réaliser un carter de soufflante tel que celui des figures 3 et 7.

### Description détaillée des modes de réalisation

L'invention sera décrite ci-après dans le cadre de son application à un carter de soufflante de turbomachine de moteur d'avion.

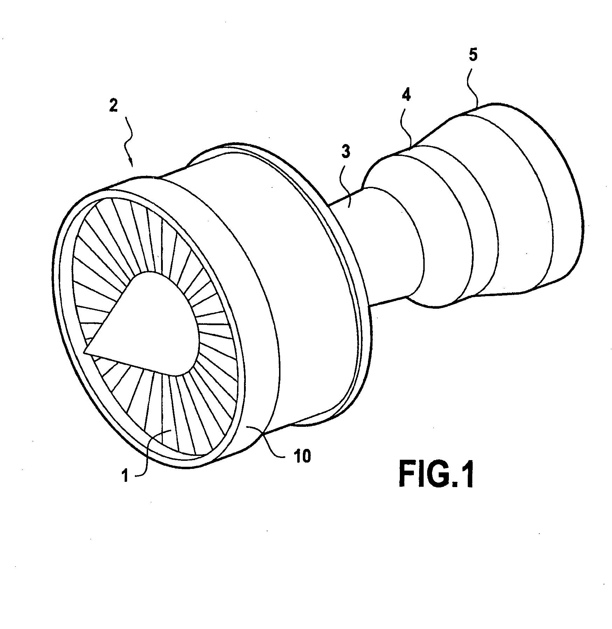

Comme montré schématiquement par la figure 1, une telle turbomachine comprend, de l'amont vers l'aval dans le sens d'écoulement du flux gazeux, une soufflante 1 disposée en entrée de la turbomachine, un compresseur 2, une chambre de combustion 3, une turbine haute pression (HP) 4 et une turbine basse pression (BP) 5. Les turbines 4 et 5 sont couplées respectivement au compresseur 2 et à la soufflante 1 par des arbres coaxiaux respectifs. La turbomachine est logée dans un carter comprenant plusieurs parties correspondant à différents de ses éléments. Ainsi, la soufflante 1 est entourée par un carter de soufflante 10 qui peut supporter sur sa face externe différents équipements tels que des harnais, tuyauteries ou boîtiers (non représentés).

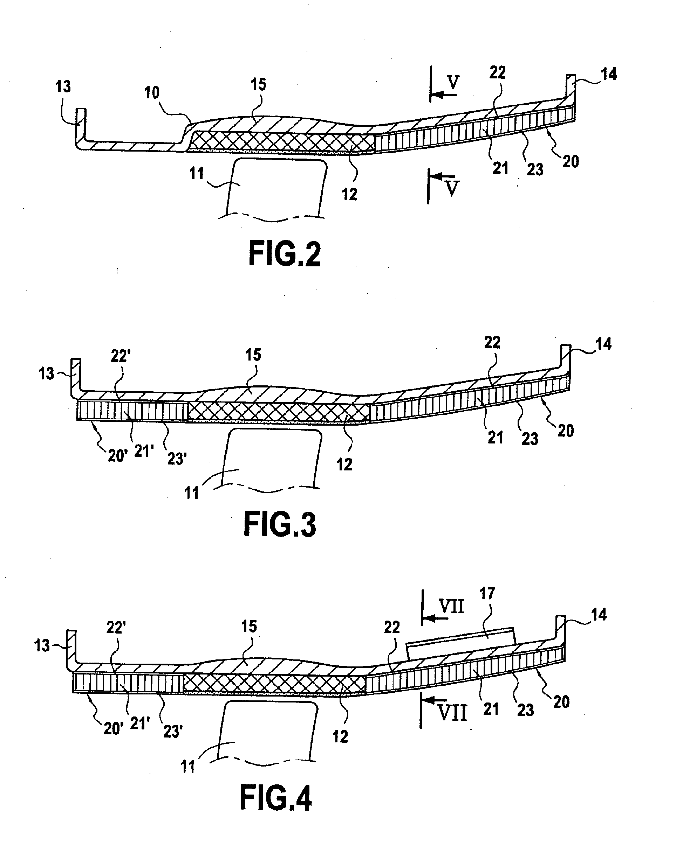

Comme montré par la figure 2, le carter 10 présente à ses extrémités des brides 13, 14 et présente dans sa partie située en regard des sommets d'aubes 11 de la soufflante une surépaisseur formant bouclier de rétention 15. Les brides 13, 14 permettent la liaison du carter de soufflante avec d'autres pièces à l'amont et à l'aval. Le bouclier de rétention 15 constitue un piège à débris projetés par centrifugation pour éviter qu'ils traversent le carter et atteignent d'autres parties de l'avion.

Egalement, dans sa partie située en regard des sommets des aubes 11, le carter 10 est muni sur sa face interne d'un revêtement abradable 12. De façon connue, le revêtement 12 peut être formé de panneaux juxtaposés fixés au carter 10 et garnis de matériau abradable comme décrit par exemple dans le document EP 2 088 290.

Toujours de façon connue, le carter 10 est muni sur sa face interne au moins d'un revêtement d'insonorisation. Dans le mode de réalisation des figures 2, 5 et 6, le revêtement d'insonorisation est formé par un ensemble de panneaux acoustiques 20 disposés dans la partie aval du carter 10, entre le revêtement abradable 12 et l'extrémité aval du carter, tandis que, dans sa partie amont, entre son extrémité amont et le revêtement abradable 12, le carter 10 est conformé pour définir, avec les surfaces internes du revêtement abradable 12 et des panneaux acoustiques 20, une veine d'entrée d'air à paroi sensiblement continue.

Dans le mode de réalisation des figures 3 et 4, deux revêtements d'insonorisation sont prévus, l'un formé d'un ensemble de panneaux acoustiques 20 dans la partie aval du carter 10, comme dans le cas de la figure 2, et l'autre formé d'un ensemble de panneaux acoustiques 20' disposés dans la partie amont du carter 10 entre son extrémité amont et le revêtement abradable 12, les surfaces internes des panneaux 20', du revêtement abradable 12 et des panneaux 20 définissant la veine d'entrée d'air.

Chaque panneau 20, 20' d'un ensemble de panneaux acoustiques s'étend sur une partie de la périphérie interne du carter 10, un ensemble de panneaux acoustiques comprenant par exemple 4 ou 6 panneaux. Comme bien connu, les panneaux 20, 20' peuvent être formés par une structure alvéolaire 21, 21' disposée entre une peau externe 22, 22' appliquée contre la face interne du carter 10 et une peau interne 23, 23' multiperforée, les alvéoles étant formées par des cellules délimitées par des parois s'étendant sensiblement radialement entre les peaux. On pourra par exemple se référer au document FR 2 613 773.

Le carter 10 est en matériau composite comprenant un renfort fibreux densifié par une matrice. Les fibres de renfort sont, par exemple, des fibres en carbone, verre, aramide ou céramique. La matrice peut être une matrice organique, par exemple un polymère époxyde, bismaléimide ou polyimide.

Le renfort fibreux peut être formé par enroulement en couches ou spires superposées d'une texture fibreuse réalisée par tissage tridimensionnel, ou tissage multicouches, et mise en forme pour obtenir une préforme fibreuse ayant une forme correspondant à celle du carter de soufflante à réaliser, la préforme fibreuse étant densifiée en étant maintenue dans sa forme au moyen d'un outillage. Un mode de réalisation d'une telle préforme fibreuse formant une seule pièce avec des parties de préforme correspondant aux brides 13, 14 et obtenue à partir d'une texture tissée multicouches à épaisseur évolutive pour pouvoir former une partie de préforme correspondant au bouclier de rétention 15 est décrit dans le document EP 1 961 923. On notera cependant que les parties de préforme correspondant aux brides 13, 14 pourraient être fabriquées séparément et liées au reste de la préforme, par exemple par couture. On notera aussi que la surépaisseur correspondant au bouclier de rétention 15 pourrait être obtenue par un sur-bobinage localisé.

Conformément à l'invention, le carter 10 est réalisé en une seule pièce avec une ou plusieurs nervures faisant saillie à la face interne et/ou à la face externe du carter et servant avantageusement au montage des panneaux acoustiques et/ou autres équipements.

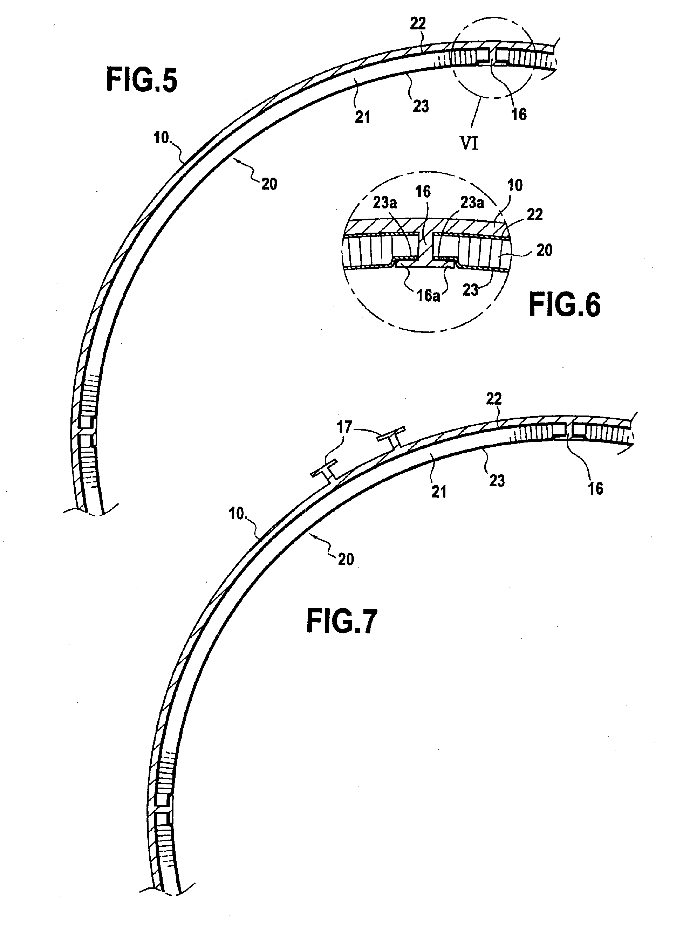

Dans le mode de réalisation des figures 2, 5 et 6, des nervures 16 s'étendent dans la partie aval du carter 10, entre le revêtement abradable 12 et l'extrémité aval du carter, les directions longitudinales des nervures 16 étant orientées axialement. Les nervures 16 ont avantageusement une forme de cornière par exemple à profil en T. Les nervures 16 sont en nombre correspondant à celui des panneaux acoustiques 20 et sont réparties par exemple régulièrement autour de l'axe du carter 10, les panneaux 20 s'étendant sur des mêmes angles. Les panneaux 20 sont disposés entre les nervures 16. Comme le montre plus en détail la figure 5, les peaux internes 23 des panneaux se prolongent le long de leurs bords axiaux pour former des rebords 23a qui s'appuient sur les ailes 16a des nervures 16, du côté externe de ces ailes. Les rebords 23a forment des décrochements qui permettent de préserver une continuité du profil de la veine d'entrée d'air. La fixation des panneaux 20 peut être réalisée au moyen d'organes de fixation tels que des vis ou des rivets reliant les rebords 23a aux ailes 16a des nervures 16. Les nervures 16 peuvent avoir un profil ayant une forme autre qu'en T permettant, en association avec des organes de fixation, le montage des panneaux 20.

Dans le mode de réalisation des figures 4 et 7, le carter 10 présente en outre sur sa face externe des nervures 17 à profil en T formées intégralement avec le carter et s'étendant axialement sur une partie de la dimension axiale du carter. Les nervures 17 (une seule est représentée) permettent la fixation d'équipements divers tels que harnais, canalisations ou boîtiers. Les nervures 17 peuvent avoir tout profil désiré, non nécessairement en T, par exemple en L.

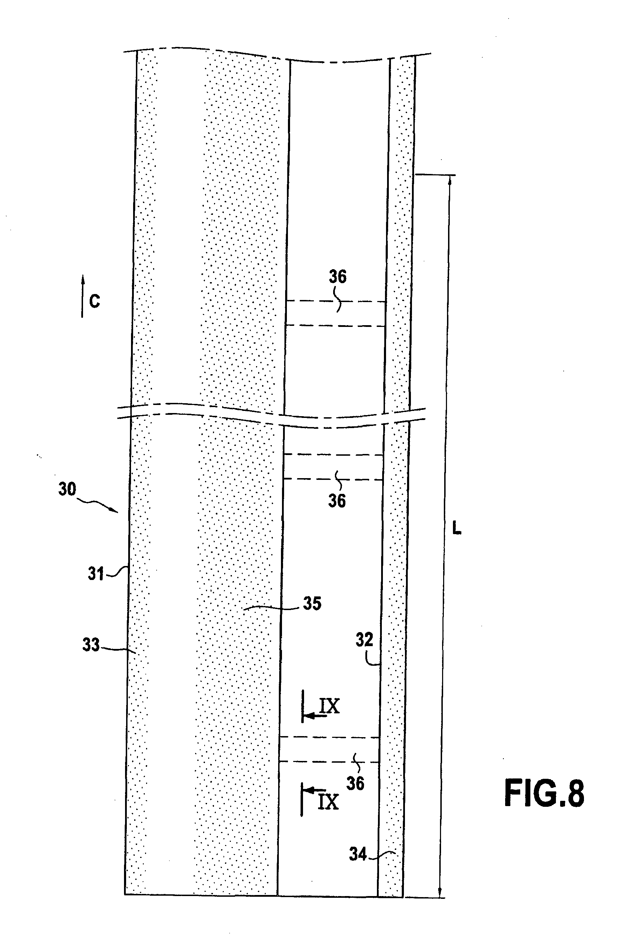

Un mode de réalisation d'une préforme fibreuse de carter de soufflante ayant des parties de préforme correspondant aux nervures 16 et solidaires du reste de la préforme sera maintenant décrit en référence aux figures 8 à 10.

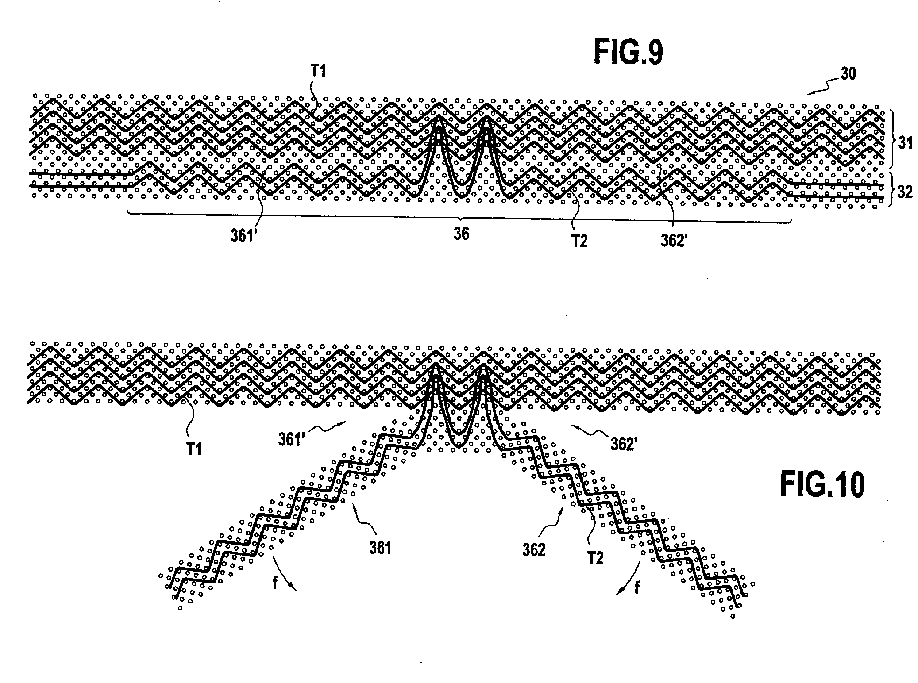

Les figures 8 et 9 montrent très schématiquement une texture tissée multicouches 30 en forme de bande ayant une première partie 31 comprenant un ensemble de couches de fils de chaîne C1 liés avec des fils de trame T1 et une deuxième partie 32 comprenant un ensemble de couches de fils de chaîne C2. La flèche C de la figure 8 indique le sens chaîne. La première partie 31 est destinée à former la partie de préforme du carter hors les nervures 16, les parties de préforme correspondant aux nervures 16 étant issues de la deuxième partie 32.

Sur la figure 8, les zones grisées 33, 34 de la première partie 31 de la texture 30 représentent les parties de la texture 30 qui, après mise en forme de celle-ci, constituent les parties de préforme de carter correspondant aux brides 13, 14 tandis que la zone grisée 35 de la première partie 31 de la texture 30 représente la partie de la texture 30 qui, après mise en forme de celle-ci, constitue la partie de préforme de carter correspondant au bouclier de rétention 15. Hors la partie 35, la première partie 31 de la texture 30 peut avoir une épaisseur sensiblement constante avec, par exemple, 4 couches de fils de chaîne liés avec 5 couches de fils de trame comme montré sur la figure 9, les nombres de couches de fils de chaîne et de trame pouvant bien entendu être différents. Sur la figure 9, les fils de trame sont représentés par souci de commodité avec une disposition en quinconce, chaque couche de fils de trame étant formée de deux demi-couches qui sont montrées avec un décalage l'une par rapport à l'autre dans le sens de l'épaisseur. Le tissage multicouches est ici réalisé avec une armure interlock, c'est-à-dire avec des fils de chaîne qui suivent des trajets identiques et qui, chacun, lient des fils de trame de plusieurs couches. D'autres armures de tissage multicouches pourraient être utilisées comme, par exemple, des armures multi-satin ou multi-toile décrites dans le document WO 2006/136755. Dans la partie 35, l'épaisseur de la partie de texture 31 peut être augmentée par ajout localisé de couches de fils de chaîne et de trame.

La deuxième partie 32 de la texture 30 s'étend sur une partie de la largeur de la première partie 31 à un emplacement correspondant sensiblement à celui des nervures 16 par rapport aux extrémités amont et aval du carter 10 et a une longueur correspondant sensiblement à la dimension axiale des nervures 16. Dans l'exemple illustré, la deuxième partie 32 comprend 2 couches de fils de chaîne qui sont liées à la première partie uniquement au niveau des emplacements des raccordements des nervures 16 avec le reste du carter 10 et qui sont liées entre elles uniquement sur des longueurs correspondant à la hauteur développée des nervures 16, de part et d'autre de ces emplacements de raccordement. Sur la figure 8, des zones 36 délimitées par des tirets illustrent les emplacements où des liaisons sont réalisées entre les couches de fils de la deuxième partie 32 et entre cette deuxième partie 32 et la première partie 31. De telles zones sont situées uniquement sur un segment de longueur L de la texture fibreuse 30 à partir d'une extrémité de celle-ci, la longueur L correspondant au périmètre interne du carter 10 au niveau de l'emplacement des nervures 16. En effet, comme décrit plus loin, la mise en forme de la texture fibreuse 30 pour former une préforme fibreuse de carter est réalisée avec enroulement de la texture fibreuse 30. Les zones 36 sont en nombre égal à celui des nervures 16, à savoir 4 dans l'exemple illustré. Sur le reste de la texture fibreuse 30, au-delà du segment de longueur L, il n'y a pas de liaison entre les parties 31 et 32 ni même de liaison entre les couches de fils de chaîne de la partie 32. On notera que la présence de fils de trame dans la partie 32 de la texture fibreuse 30 pourra être limitée aux zones où une liaison entre couches de fils de chaîne de la partie 32 est réalisée.

La figure 9 montre, au niveau d'une zone 36, comment les fils de chaîne C2 de la partie 32 sont liés avec des fils de trame T2 de la partie 32 et avec des fils de trame T1 de la partie 31, l'armure de tissage multicouches étant par exemple de type interlock.

Pour la mise en forme d'une préforme fibreuse de carter à partir de la texture 30, les fils de chaîne de la deuxième partie 32 sont éliminés sauf au niveau des zones 36. Dans chaque zone 36 subsistent alors, de part et d'autre, des fils de chaîne de la partie 32 liés avec des fils de trame de la partie 31, des parties tissées 361, 362 qui sont séparées de la partie 31 par des zones de déliaison 361', 362' (figures 9 et 10). Les parties tissées peuvent alors être dépliées (flèches f) pour être amenées côte à côte afin de former une partie de préforme de nervure 16.

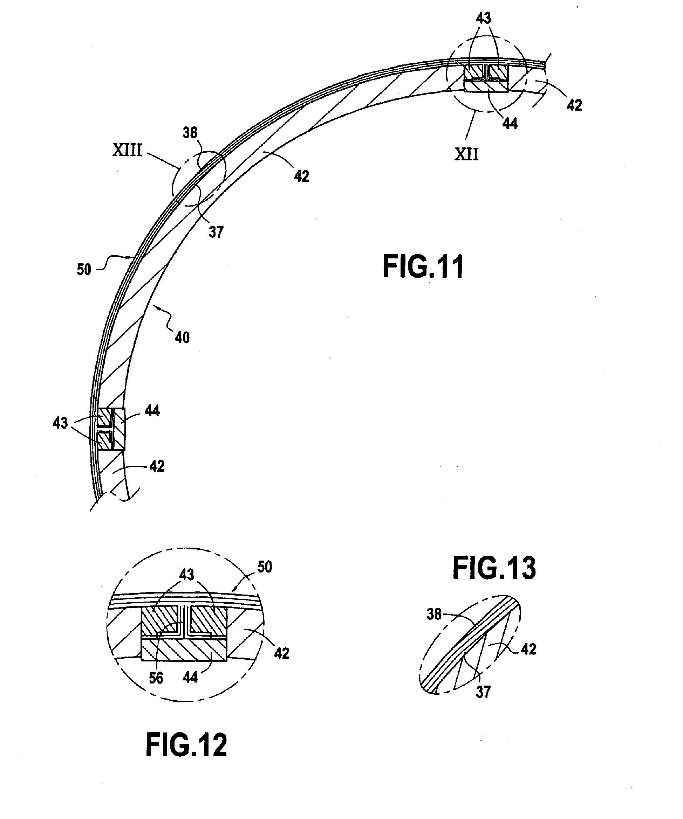

Les figures 11 et 12 montrent un outillage permettant de mettre en forme une préforme fibreuse 50 de carter par enroulement de la texture fibreuse 30. Un mandrin 40 est formé de secteurs sensiblement annulaires 42 dont les bords s'étendant axialement viennent au contact de pièces 43 qui contribuent à conférer une forme en cornière aux parties de préformes 56 des nervures 16, après dépliage des parties 361, 362. Des pièces supplémentaires 44 sont disposées entre les bords axiaux des secteurs 42 et s'appuient sur les bases des nervures 16, les secteurs 42 ayant une dimension radiale supérieure à celle des nervures 16. Les pièces 43, 44 mettent en forme les préformes 56 des nervures 16 et les pièces 44 assurent aussi l'étanchéité de l'outillage 40 du côté interne. Les pièces 44 peuvent être maintenues en position au moyen de pontets (non représentés) s'appuyant sur leurs faces exposées et fixés par exemple par vissage aux extrémités circonférentielles des secteurs 42 du côté interne.

Après formation d'une première spire ou couche de texture fibreuse 30 avec les parties de préformes 56 des nervures 16, la texture fibreuse est enroulée sur le mandrin 40 en formant une ou plusieurs spires ou couches superposées, la texture fibreuse 30 étant alors limitée à sa première partie 31. Le nombre de spires ou couches est fonction de l'épaisseur totale désirée compte tenu de l'épaisseur de la texture fibreuse 30. Comme montré par la figure 13, dans les parties terminales 37, 38 à ses extrémités longitudinales, on peut conférer à la partie 31 de la texture fibreuse 30 une épaisseur progressivement croissante à partir des extrémités longitudinales et la longueur de la texture fibreuse 30 peut être choisie de manière que les parties terminales se trouvent diamétralement opposées pour éviter une surépaisseur notable au niveau des extrémités de la texture fibreuse enroulée.

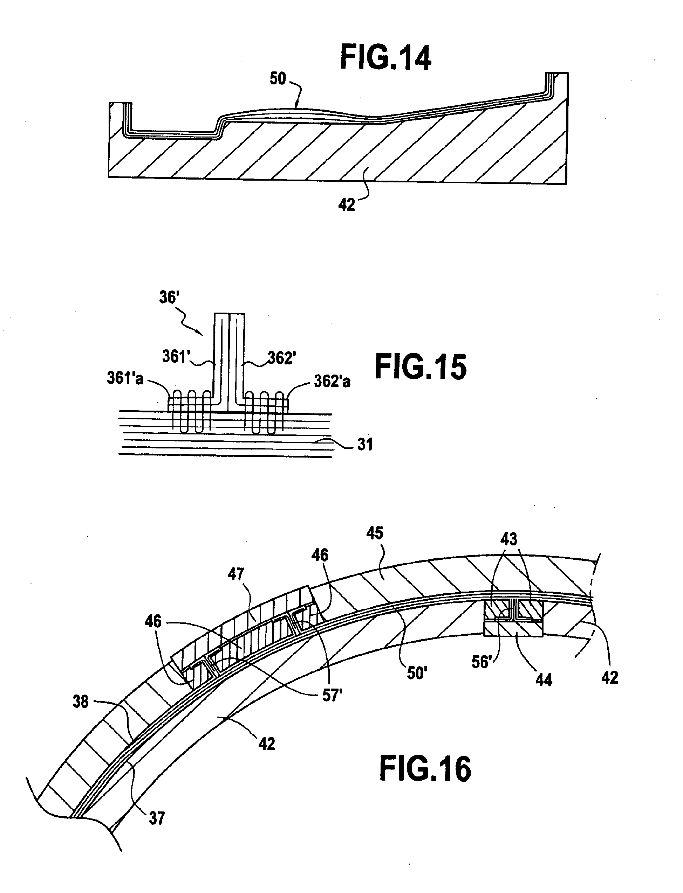

Comme le montre la figure 14, les secteurs 42 sont conformés pour conférer le profil souhaité à la face interne du carter 10 et pour former des parties de préformes de brides. On obtient ainsi une préforme fibreuse 50 ayant une forme correspondant à celle du carter 10 à réaliser.

La densification de la préforme 50 est réalisée par exemple par imprégnation par une composition précurseur de la matrice souhaitée, par exemple par une résine. On pourra utiliser un processus d'imprégnation bien connu de type RTM (« Resin Transfer Moulding ») avec maintien de la préforme 50 entre l'outillage 40 et un outillage complémentaire (non représenté) appliqué sur sa surface externe. Après réticulation de la résine, la préforme densifiée peut être retirée de l'outillage et un usinage de finition du carter peut éventuellement être réalisé.

Dans l'exemple illustré par la figure 11, le début et la fin de la première spire ou couche de texture 30 enroulée se situe entre deux parties de préformes de nervures 16. En variante, le début et la fin de la première spire ou couche de texture 30 peut se trouver au niveau de l'emplacement d'une partie de préforme de nervure 16, la zone 36 correspondante étant alors partagée en deux demi-zones semblables situées aux extrémités du segment de longueur L de la texture fibreuse 30.

La figure 15 montre une variante de réalisation de la texture fibreuse permettant, après son enroulement, d'obtenir une préforme pour un carter 10 à nervures 16 intégrées. Selon cette variante, une texture fibreuse en forme de bande limitée à la partie 31 des figures 8 et 9 est réalisée par tissage tridimensionnel ou multi-couches et des parties de préformes des nervures sont formées séparément à partir de texture fibreuse tissée et sont liées à la première partie 31 de la préforme 30 par exemple par couture ou implantation de fils. Dans l'exemple illustré, chaque partie de préforme de nervure 36' est formée de deux bandes 361', 362' accolées repliées le long d'un bord longitudinal pour former des ailes 361'a, 362'a fixées à la partie 31 par couture. La mise en forme de la préforme fibreuse est réalisée au moyen d'un outillage comme décrit ci-avant pour la préforme 50.

Bien entendu, dans le mode de réalisation de la figure 3, le montage des panneaux 20 et des panneaux 20' pourra être réalisé de façon similaire au moyen de nervures intégrées au carter et obtenues comme décrit ci-avant pour les nervures 16. De préférence, on réalise alors une préforme fibreuse du carter avec des parties de préforme de nervures s'étendant continûment d'un emplacement correspondant à l'extrémité amont des panneaux 20' à un emplacement correspondant à l'extrémité aval des panneaux 20. La partie centrale des nervures dans l'intervalle entre les emplacements des panneaux 20' et 20 est éliminée lors de l'usinage final du carter après densification de la préforme.

Dans ce qui précède, on a décrit la réalisation et la mise en forme d'une préforme fibreuse permettant d'intégrer au carter de soufflante des nervures 16 pour le montage de panneaux acoustiques du côté interne du carter.

On pourra procéder de façon similaire pour la réalisation et la mise en forme d'une préforme fibreuse permettant d'intégrer au carter de soufflante une ou plusieurs nervures s'étendant axialement et destinées au montage d'équipements autres que des panneaux acoustiques du côté interne et/ou du côté externe du carter.

En particulier, on pourra réaliser une préforme de carter de soufflante intégrant des premières parties de préformes de nervures destinées à la fixation de panneaux acoustiques du côté interne et des deuxièmes parties de préformes de nervures destinées à la fixation d'équipements du côté externe, comme dans le cas du carter des figures 4 et 7.

La figure 16 montre une telle préforme fibreuse 50' mise en forme au moyen d'un outillage avec des parties de préformes 56' pour des nervures 16 de fixation de panneaux acoustiques et des parties de préforme 57' pour des nervures 17 de fixation d'équipements du côté externe du carter, la préforme 50' se distinguant de la préforme 50 par la présence supplémentaire des parties de préforme 57'.

Pour obtenir la préforme 50', on peut enrouler en spires superposées une texture multicouches tissée en appliquant par exemple un principe tel que décrit en référence aux figures 8 à 10 mais en ajoutant un ensemble de couches de fils de chaîne supplémentaire du côté de la première partie 31 opposé à celui où se trouve la deuxième partie 32, à l'autre partie d'extrémité longitudinale de la partie 31 et avec les déliaisons nécessaires pour obtenir, après dépliage et mise en forme, les parties de préforme 57' faisant saillie du côté externe de la dernière spire de la texture enroulée. En variante, on peut rapporter les parties de préforme 56' et/ou 57' par couture comme montré par la figure 15.

Pour la mise en forme de la préforme 50', on utilise du côté interne un outillage 40 semblable à celui de la figure 11. Du côté externe, l'outillage comprend un contre-moule comprenant des parties annulaires 45 et des pièces 46, 47 pour la mise en forme des parties de préforme 57'.

La densification de la préforme 50' est réalisée comme décrit pour la préforme 50.

## Revendications

1. Carter de soufflante de turbomachine, le carter (10) étant en matériau composite comprenant un renfort fibreux densifié par une matrice et étant formé en une seule pièce avec au moins une nervure (16, 17) qui fait saillie à la face interne ou à la face externe du carter, **caractérisé en ce que** chaque nervure (16, 17) comprend une partie de renfort fibreux qui est liée au renfort fibreux du reste du carter par tissage ou par couture.

2. Carter de soufflante selon la revendication 1, **caractérisé en ce que** le renfort fibreux est formé par une texture tissée (30) enroulée en couches superposées, la partie (36) de renfort fibreux de la ou chaque nervure (16, 17) étant solidaire de la couche interne ou externe de la texture par tissage.

3. Ensemble formé par un carter de soufflante et des panneaux acoustiques fixés sur la face interne du carter, **caractérisé en ce que** le carter (10) est en matériau composite comprenant un renfort fibreux densifié par une matrice et est formé en une seule pièce avec des nervures (16) qui font saillie à la face interne du carter et s'étendent axialement sur une partie de la dimension axiale du carter, chaque nervure (16) comprenant une partie de renfort fibreux qui est liée au renfort fibreux du reste du carter par tissage ou par couture, et les panneaux acoustiques (20) sont logés entre les nervures (16) et fixés à celles-ci.

4. Ensemble selon la revendication 3, **caractérisé en ce que** le renfort fibreux est formé par une texture tissée (30) enroulée en couches superposées, la partie (36) de renfort fibreux de chaque nervure (16) étant solidaire de la couche interne de la texture par tissage.

5. Ensemble selon l'une quelconque des revendications 3 et 4, **caractérisé en ce que** le carter est formé en une seule pièce avec en outre au moins une nervure (17) qui fait saillie à la face externe du carter et qui comprend une partie de renfort fibreux liée au reste du renfort fibreux du carter par tissage ou par couture.

6. Turbomachine équipée d'un carter de soufflante selon la revendication 1 ou la revendication 2.

7. Turbomachine équipée d'un ensemble formé par un carter de soufflante et des panneaux acoustiques selon l'une quelconque des revendications 3 à 5.

## Patentansprüche

1. Gebläsegehäuse einer Turbomaschine, wobei das Gehäuse (10) aus Verbundwerkstoff, der eine durch eine Matrix verdichtete Faserverstärkung umfasst, besteht und mit wenigstens einer Rippe (16, 17), die an der Innenseite oder an der Außenseite des Gehäuses vorspringt, einstückig ausgebildet ist, **dadurch gekennzeichnet, dass** jede Rippe (16, 17) ein Faserverstärkungsteil umfasst, das mit der Faserverstärkung des restlichen Gehäuses durch Weben oder durch Nähen verbunden ist.

2. Gebläsegehäuse nach Anspruch 1, **dadurch gekennzeichnet, dass** die Faserverstärkung durch eine gewebte Struktur (30), die in übereinander angeordneten Lagen aufgewickelt ist, gebildet ist, wobei das Faserverstärkungsteil (36) der oder einer jeden Rippe (16, 17) mit der Innen- oder Außenlage der Struktur durch Weben fest verbunden ist.

3. Anordnung, die durch ein Gebläsegehäuse und Akustikpaneele, welche an der Innenseite des Gehäuses befestigt sind, gebildet ist, **dadurch gekennzeichnet, dass** das Gehäuse (10) aus Verbundwerkstoff, der eine durch eine Matrix verdichtete Faserverstärkung umfasst, besteht und mit Rippen (16), die an der Innenseite des Gehäuses vorspringen und sich über einen Teil der axialen Abmessung des Gehäuses axial erstrecken, einstückig ausgebildet ist, wobei jede Rippe (16) ein Faserverstärkungsteil umfasst, das mit der Faserverstärkung des restlichen Gehäuses durch Weben oder durch Nähen verbunden ist, und die Akustikpaneele (20) zwischen den Rippen (16) aufgenommen und an diesen befestigt sind.

4. Anordnung nach Anspruch 3, **dadurch gekennzeichnet, dass** die Faserverstärkung durch eine gewebte Struktur (30), die in übereinander angeordneten Lagen aufgewickelt ist, gebildet ist, wobei das Faserverstärkungsteil (36) einer jeden Rippe (16) mit der Innenlage der Struktur durch Weben fest verbunden ist.

5. Anordnung nach einem der Ansprüche 3 und 4, **dadurch gekennzeichnet, dass** das Gehäuse außerdem mit wenigstens einer Rippe (17), die an der Außenseite des Gehäuses vorspringt und die ein Faserverstärkungsteil umfasst, das mit der restlichen Faserverstärkung des Gehäuses durch Weben oder durch Nähen verbunden ist, einstückig ausgebildet ist.

6. Turbomaschine, die mit einem Gebläsegehäuse nach Anspruch 1 oder Anspruch 2 ausgestattet ist.

7. Turbomaschine, die mit einer Anordnung, welche durch ein Gebläsegehäuse und Akustikpaneele gebildet ist, nach einem der Ansprüche 3 bis 5 ausgestattet ist.

## Claims

1. A turbine engine fan casing (10) made of composite material comprising fiber reinforcement densified by a matrix and shaped as a single part with at least one rib (16, 17) that projects from the inside face or the outside face of the casing, the casing being **characterized in that** each rib (16, 17) comprises a fiber reinforcement portion that is connected to the fiber reinforcement of the remainder of the casing by weaving or by stitching.

2. A fan casing according to claim 1, **characterized in that** the fiber reinforcement is formed by a woven texture (30) wound in superposed layers, the fiber reinforcement portion (36) of the or each rib (16, 17) being secured to the inner or outer layer of the texture by weaving.

3. An assembly made up of a fan casing and acoustic panels fastened to the inside face of the casing, the assembly being **characterized in that** the casing (10) is made of composite material comprising fiber reinforcement densified by a matrix and is formed as a single part with ribs (16) that project from the inside face of the casing and that extend axially over a fraction of the axial dimension of the casing, each rib (16) comprising a fiber reinforcement portion that is connected to the fiber reinforcement of the remainder of the casing by weaving or by stitching, and the acoustic panels (20) are housed between the ribs (16) and are fastened thereto.

4. An assembly according to claim 3, **characterized in that** the fiber reinforcement is formed by a woven texture (30) wound in superposed layers, the fiber reinforcement portion (36) of each rib (16) being secured to the inner layer of the texture by weaving.

5. An assembly according to claim 3 or claim 4, **characterized in that** the casing is formed as a single part also including at least one rib (17) that projects from the outside face of the casing and that includes a fiber reinforcement portion connected to the remainder of the fiber reinforcement of the casing by weaving or by stitching.

6. A turbine engine fitted with a fan casing according to claim 1 or claim 2.

7. A turbine engine fitted with an assembly constituted by a fan casing and acoustic panels according to any one of claims 3 to 5.
